# EUROPÄISCHE PATENTANMELDUNG

(11) **EP 2 275 510 A2**
(43) Veröffentlichungstag der Anmeldung: **19.01.2011**
(21) Anmeldenummer: 10007090.3
(22) Anmeldetag: 09.07.2010
(51) Int. Cl.: C09K 5/06, F28D 20/02

(54) **Kleinvolumige PCM-Kapsel, Verfahren zu ihrer Herstellung sowie diese umfassender Latentwärmespeicher**

(30) Priorität: 14.07.2009 DE 102009032918
(71) Anmelder: Schwarze automation GmbH, 70374 Stuttgart (DE); REHAU AG + Co, 95111 Rehau (DE)
(72) Erfinder: Scholze-Starke, Jörg, 95111 Rehau (DE); Schettler, Thomas, 95111 Rehau (DE); Krause, Reinhold, 8053 Zürich (CH); Schwarze, Thomas, 70374 Stuttgart (DE)

(57) **Zusammenfassung**

Die vorliegende Erfindung bezieht sich auf eine kleinvolumige PCM-Kapsel, die mindestens ein Phasenwechselmaterial und eine das Phasenwechselmaterial einschließende Folienverpackung umfasst, wobei ein Volumen des mindestens einen Phasenwechselmaterials im Bereich von 0,2 ml bis 50 ml in der Folienverpackung eingeschlossen ist, wobei die Folienverpackung ein an den Enden verschlossener Folienschlauch bzw. Folienschlauchabschnitt ist und eine Wanddicke im Bereich von 20 µm bis 400 µm besitzt. Darüber hinaus bezieht sich die vorliegende Erfindung auf ein Verfahren zur Herstellung derartiger kleinvolumiger PCM-Kapseln sowie auf einen Latentwärmespeicher, der eine Vielzahl kleinvolumiger PCM-Kapsein umfasst.

## Beschreibung

Die vorliegende Erfindung bezieht sich auf eine kleinvolumige PCM-Kapsel und insbesondere bezieht sich die vorliegende Erfindung auf eine kleinvolumige PCM-Kapsel, die mindestens ein Phasenwechselmaterial und eine das Phasenwechselmaterial einschließende Folienverpackung umfasst. Darüber hinaus bezieht sich die vorliegende Erfindung auf ein Verfahren zur Herstellung einer derartigen kleinvolumigen PCM-Kapsel sowie auf einen Latentwärmespeicher, der eine Vielzahl derartiger PCM-Kapseln umfasst.

Aufgrund eines hohen Anteils an vorgefertigten Bauteilen, aufgrund der Vermeidung langer Trocknungszeiten und aufgrund der reduzierten Kosten für diese vorgefertigten Bauteile wird eine zeitgemäße Leichtbauweise unter Verwendung von Holz- und Stahlkonstruktionen mit dämmenden Wandbaustoffen beim Bau von Büro- und Wohngebäuden in zunehmendem Maße eingesetzt. Zwar bringt diese Leichtbauweise eine Ressourceneinsparung mit sich, führt jedoch andererseits aufgrund der eingesparten Baustoffe auch zu einer fehlenden Wärmekapazität, so dass in derartigen Gebäuden verstärkt Temperaturschwankungen auftreten. Insbesondere kann es im Sommer zu Temperaturspitzen kommen, die als unangenehm empfunden werden.

Um derartige Temperaturspitzen, die vor allem tagsüber auftreten, auffangen zu können, werden zunehmend so genannte Phasenwechselmaterialien (Phase Change Material; nachfolgend PCM) eingesetzt. Derartige PCMs sind in der Lage, in einem bestimmten Temperaturbereich eine spezifische Wärmemenge isotherm aufzunehmen, zu speichern und zu einem späteren Zeitpunkt, also bei niedrigeren Temperaturen, wieder an die Umgebung abzugeben. Auf diese Weise können die in den Sommermonaten auftretenden teilweise extremen Temperaturschwankungen in derartigen Gebäuden abgeschwächt werden. Darüber hinaus kann die in den Sommermonaten in den PCMs gespeicherte Energie über einen Wärmetauscher einem Zwischenspeicher zugeführt und in der kälteren Jahreszeit wiederum zum Heizen des Gebäudes beitragen.

Geeignete Phasenwechselmaterialien zeigen im als angenehm empfundenen Temperaturbereich von 21 °C bis 26 °C einen Phasenübergang, insbesondere vom festen in den flüssigen Aggregatzustand, und können dabei in Abhängigkeit vom verwendeten Material eine große Menge an Wärmeenergie aufnehmen bzw. abgeben, so dass ein verbessertes Raumklima geschaffen wird.

Die Integration derartiger PCMs in Bauplatten oder Baumaterialien führt jedoch zu Problemen. Um derartige PCMs integrieren zu können, werden diese vorher ummantelt. Zur Durchführung einer derartigen Ummantelung der PCMs stehen zwei Möglichkeiten zur Verfügung: Einerseits werden organische PCMs, beispielsweise Paraffine, unter Einsatz eines Emulsionsprozesses in Polymerhüllen mit einem Durchmesser von wenigen Mikrometern mikroverkapselt. Der Hauptnachteil derartiger Mikrokapseln liegt in der schwankenden Dicke der Polymerhülle, so dass die Verkapselung an Stellen mit geringer Dicke keine hohe Stabilität besitzt. Andererseits können alle PCMs, also Paraffine sowie anorganische Salzhydrate, auf makroskopischer Basis in entsprechenden Behältnissen wie Folienbeuteln, Kunststoffcontainern oder Stegmehrfachplatten makroverkapselt werden. Insbesondere im Falle makroskopisch großer Behältnisse sind diese hinsichtlich der Integration in Baumaterialien, hinsichtlich des Energietransfers zu den PCMs und hinsichtlich der Zyklenstabilität mit Nachteilen behaftet. So weisen die makroskopisch großen Behältnisse vergleichweise dicke Wandungen auf, so dass der Energietransfer aus der Umgebung durch diese Wandungen zu den PCMs erschwert ist.

Beispielsweise beschreibt die US 4,513,053 verkapselte PCM- Pellets, wobei ein festes PCM-Material (Salzhydrate und Paraffine) zu Pellets verpresst werden und wobei die Pellets eine derartige Porosität aufweisen, dass das Volumen des Pellets im festen Zustand dem Volumen des geschmolzenen Materials entspricht. Nach dem Verpressen zu Pellets werden die PCM-Materialien unter Verwendung einer Trommel mit einem härtbaren Material überzogen, wo es nachfolgend unter Bildung einer dauerhaften nahtlosen Wasserdampf sperrenden Verkapselung gehärtet wird. Die verkapselten PCM- Pellets werden abschließend in Beton- oder Gipsbaumaterialien eingearbeitet. Weiterhin beschreibt die DE 199 29 861 A1 PCM-Speicherverbundsysteme, in denen ein PCM-Schmelzwärmespeichermaterial in den Poren eines porösen Trägermaterials eingebettet ist, wobei offenporige, schaumartige oder schwammartige mineralische Trägermaterialien ganz oder teilweise mit anorganischen Salzhydraten oder Paraffinen gefüllt sind und das PCM-Material mit organischen oder anorganischen Materialien umhüllt ist und so dauerhaft eingeschlossen ist. Im Beispiel 1 der DE 199 29 861 A1 werden Blähtongranulate mit einer Korngröße von 4 bis 8 mm in 100 °C heißem Paraffin eingekocht und nach dem Erstarren des Paraffins mit einer Umhüllung aus Teflon überzogen und getrocknet.

Eine Kombination von Mikro- und Makroverkapselung eines PCM-Materials ist in der US 6,835,334 B2 beschrieben. Darin werden Makrokapseln, die eine Vielzahl von PCM-Mikrokapseln enthalten, hergestellt, indem die Vielzahl an PCM-Mikrokapseln in einer Geliermittellösung suspendiert werden, die so erhaltene Mikrokapsel-Suspension als einzelne Tröpfchen einer Vernetzungslösung zugesetzt wird, wodurch der Geliermittelüberzug über den PCM-Mikrokapseln vernetzt wird, so dass diskrete Makrokapseln, die eine Vielzahl von PCM-Mikrokapseln enthalten, gebildet werden, die abschließend getrocknet werden. Auf eine mögliche Verwendung der auf diese Weise erhaltenen Makrokapseln für den Baubereich wird hingewiesen.

Derartige verkapselte bzw. ummantelte PCM-Materialien finden insbesondere im Bereich der Klimatisierungstechnik, als Baumaterial, im Bereich der Automobil- und Gerätetechnik sowie im Bereich der Transporttechnologie Anwendung.

Dabei sind die PCMs in Speichermodulen (Latentwärmespeicher) eingesetzt, die sich hinsichtlich ihrer Geometrie in folgende Klassen unterteilen lassen: mikronisierte Speichermedien (insbesondere Paraffine) mit polymerer Mikro-Umhüllung, relativ großvolumige Speicherelemente mit Folienumhüllungen in Form von Platten, Kugeln, Tropfen und dergleichen, mikroporöse Granulate (mit einem Durchmesser von etwa 5 mm), wobei das PCM in den Poren des Granulats aufgenommen ist und so gegen Auslaufen stabilisiert ist, und Suspensionen.

Ein Nachteil dieser bekannten PCM-Systeme besteht in der mangelnden Zyklenstabilität der jeweiligen Systeme. Ein weiterer Nachteil der bekannten PCM-Systeme liegt in ihrer trägen Speicherdynamik. Die PCM-Systeme weisen ein ungünstiges Verhältnis ihrer Oberfläche zu ihrem Volumen bzw. ihrer Verkapselungswand zu ihrem Verkapselungsvolumen auf. Darüber hinaus ist im Falle von mikroporösen Granulaten das Verhältnis von Speichervolumen zum Gesamtvolumen ungünstig, weil derzeit maximal ein Beladungsvolumen von etwa 60 % in Relation zum Gesamtvolumen des PCM-Speicherkörpers erreicht werden kann. Weitere Nachteile, die bei den bekannten PCM-Speichermodulen zumindest teilweise auftreten, liegen in ihren hohen Herstellungskosten aufgrund komplizierter Herstellungsverfahren, der schlechten Handhabbarkeit der bisher bekannten Speichermodule sowie vor allem in ihrer mangelnden Langlebigkeit.

Vor diesem Hintergrund liegt der vorliegenden Erfindung die Aufgabe zugrunde, PCM-Kapseln zur Verfügung zu stellen, die diese Nachteile überwinden. Insbesondere sollen die erfindungsgemäßen PCM-Kapseln eine gegenüber den bekannten Speichermodulen verbesserte Zyklenbeständigkeit, also Langlebigkeit aufweisen, eine verbesserte Speicherdynamik besitzen und besser handhabbar sein. Ferner liegen weitere Aufgaben der vorliegenden Erfindung in der Bereitstellung eines kostengünstigen Herstellungsverfahrens für derartige PCM-Kapseln sowie in der Bereitstellung eines Latentwärmespeichers, der auf den erfindungsgemäßen PCM-Kapseln basiert.

Dementsprechend werden die der vorliegende Erfindung zugrunde liegenden Aufgaben durch eine kleinvolumige PCM-Kapsel mit den Merkmalen des Anspruches 1, durch ein Verfahren zur Herstellung kleinvolumiger PCM-Kapseln gemäß Anspruch 12 bzw. durch einen Latentwärmespeicher gemäß Anspruch 15 gelöst.

Bevorzugte Ausführungsformen der erfindungsgemäßen kleinvolumigen PCM-Kapsel bzw. des erfindungsgemäßen Herstellungsverfahrens sind in den jeweils davon abhängigen Ansprüchen beschrieben.

Damit liegt die vorliegende Erfindung in der Bereitstellung einer kleinvolumigen PCM-Kapsei, die mindestens ein Phasenwechselmaterial und eine das Phasenwechselmaterial einschließende Folienverpackung umfasst, wobei ein Volumen des mindestens einen Phasenwechselmaterials im Bereich von 0,2 ml bis 50 ml eingeschlossen ist. Dabei ist die Folienverpackung ein an den Enden verschlossener Folienschlauch bzw. Folienschlauchabschnitt und weist eine Wanddicke im Bereich von 20 µm bis 400 µm auf.

Des Weiteren stellt die vorliegende Erfindung ein Verfahren zur Herstellung derartiger kleinvolumiger PCM-Kapseln zur Verfügung, wobei das Verfahren die Stufen des Bereitstellens eines an einem Ende verschlossenen Folienschlauches, des Einfüllens von mindestens einem Phasenwechselmaterial in einem Volumen von 0,2 ml bis 50 ml in den an einem Ende verschlossenen Folienschlauch, wodurch eine Abfülleinheit erhalten wird, des Verschließens der Abfülleinheit durch Pressschweißen und des Abtrennens der verschlossenen Abfülleinheit, wodurch eine kleinvolumige PCM-Kapsel erhalten wird, umfasst.

Die vorliegende Erfindung bezieht sich auch auf einen Latentwärmespeicher, der eine Vielzahl von erfindungsgemäßen kleinvolumigen PCM-Kapseln umfasst.

In Bezug auf die erfindungsgemäße kleinvolumige PCM-Kapsel wird als PCM vorzugsweise ein Material verwendet, das in einem Temperaturbereich von -30 °C bis 160 °C einen Phasenübergang vorzugsweise flüssig- fest zeigt.

Bei einer Verwendung der erfindungsgemäßen PCM-Kapsel für Baumaterialien ist bevorzugt, als PCM ein Material mit einem Phasenübergang im Bereich von 10°C bis 30 °C, besonders bevorzugt im Bereich von 20°C bis 26 °C zu verwenden, wobei sich für bestimmte Anwendungen, beispielsweise für Solarenergienutzung, der bevorzugte Temperaturbereich für den Phasenübergang des PCMs auch von 20 °C bis 100°C, vorzugsweise von 40 °C bis 80 °C und besonders bevorzugt von 50 °C bis 70 °C erstrecken kann.

Als für die vorliegende Erfindung bevorzugte Phasenwechselmaterialien sind damit Paraffine, anorganische Salzhydrate sowie Kombinationen davon bevorzugt, die einen Phasenübergang innerhalb der genannten Temperaturbereiche zeigen. Als Beispiele für anorganische Salzhydrate können die Hydrate der Halogenide (Fluoride, Chloride, Bromide und Jodide), der Chlorate, der Sulfate, der Hydroxide und Nitrate von Alkalimetallen (Lithium, Natrium, Kalium, Rubidium, Cäsium), Erdalkalimetallen (Magnesium, Calcium, Strontium, Barium) sowie eutektische und/oder kongruent schmelzende Gemische der vorgenannten angeführt werden.

In Bezug auf die Verwendung von Paraffinen als PCMs können grundsätzlich alle bekannten Paraffine zum Einsatz kommen. Vorzugsweise enthalten diese flüssige Komponenten (beispielsweise niedrig schmelzende n-Alkane und Isoalkane, Naphtene).

Durch die Wahl der Kohlenstoffkettenlängen der Paraffine kann ihr Schmelzbereich eingestellt werden. Vorzugsweise werden C₃₀-C₁₀₀-Kohlenstoffketten als Kettenlängen für die Paraffine eingesetzt.

Es kann sich auch als vorteilhaft erweisen, wenn eine Mischung aus einem oder mehreren der oben genannten Salzhydrate mit einem oder mehreren Parafinen als PCM-Material verwendet wird.

Besonders bevorzugte Salzhydrate sind Calciumchlorid-Tetrahydrat, Calciumchlorid- Hexahydrat, Kaliumfluorid- Dihydrat, Kaliumfluorid-Tetrahydrat, Lithiumchlorat- Trihydrat, Magnesiumsulfat- Heptahydrat, Magnesiumchlorid- Dihydrat, Magnesiumchlorid- Hexahydrat, Bariumhydroxid- Octahydrat, Natriumsulfat- Decahydrat. In besonders bevorzugten Ausführungsformen ist das verwendete PCM Calciumchlorid- Hexahydrat, eine Mischung aus Calciumchlorid- Hexahydrat und Magnesiumchlorid- Hexahydrat sowie ggf. einem Bindemittel, eine Mischung aus Calciumchlorid-Tetrahydrat, Calciumchlorid- Hexahydrat, einem Paraffin sowie Ethandiol als Bindemittel oder Lithiumnitrat- Trihydrat.

Darüber hinaus kann es von Vorteil sein, wenn dem Phasenwechselmaterial eine oder mehrere der folgenden Komponenten zugesetzt sind: Emulgatoren, Lösungsmittel wie Ethandiol, Polyethylenglykole, andere Hydroxylgruppen enthaltende Verbindungen wie Alkohole, Bindemittel und dergleichen.

Gemäß der vorliegenden Erfindung ist in einer erfindungsgemäßen kleinvolumigen PCM-Kapsel ein Volumen an PCM im Bereich von 0,2 ml bis 50 ml, insbesondere 0,3 ml bis 5 ml, vorzugsweise 0,5 ml bis 3 ml und besonders bevorzugt ein Volumen von etwa 1 ml an dem PCM in einer Folienverpackung enthalten.

Um eine Volumenänderung beim Phasenübergang des PCM besser ausgleichen zu können, kann erfindungsgemäß in der Folienverpackung darüber hinaus ein Gaspolster in einem Volumenanteil von 5 Vol.-% bis 30 Vol.-%, jeweils bezogen auf das Volumen des PCM, in der Folienverpackung eingeschlossen sein. Vorzugsweise beträgt der Volumenanteil des Gaspolsters 5 Vol.-% bis 20 Vol.-%, besonders bevorzugt 10 Vol.-% bis 15 Vol.-%, jeweils bezogen auf das Volumen des Phasenwechselmaterials.

Das Gaspolster wird vorzugsweise von einem Gas oder Gasgemisch gebildet, dass das in der erfindungsgemäßen PCM-Kapsel enthaltene PCM und die Folienverpackung nicht beeinträchtigt. Besonders bevorzugt wird das Gaspolster daher von Luft, Stickstoff, Kohlendioxid, einem Edelgas (Helium, Neon, Argon, Xenon, Krypton, Radon) oder einem Gemisch aus zwei oder mehr der vorgenannten gebildet.

Die Festlegung der Gase für das Gaspolster kann auch im Sinne einer Tracer-Funktion erfolgen, so dass durch Messungen am fertigen Produkt unter Einsatz hochsensibler Analysemethoden Rückschlüsse auf die erzielte Dichtheit erfolgen können.

Wenn zu erwarten ist, dass beim funktionellen Einsatz der gekapselten PCMs größere Temperaturbereiche durchlaufen werden (wie z. B. eine Temperaturdifferenz von 20 K oder höher) kann es vorteilhaft sein, das Verschließen der Folienverpackung nach dem Einführen des PCMs derart durchzuführen, dass Gaseinschlüsse in der Folienverpackung weitgehend vermieden werden. Auf diese Weise ist gewährleistet, dass eine temperaturbedingte Volumenausdehnung des in die Folienverpackung eingeschlossenen Gaspolsters auf ein Minimum zurückgeführt ist. In diesem Fall kann es sich als besonders günstig erweisen, wenn die Folienverpackung dazu in der Lage ist, die temperaturbedingte Volumenänderung des PCMs zu kompensieren.

Gemäß der vorliegenden Erfindung besitzt die Folienverpackung eine Wanddicke im Bereich von 20 µm bis 400 µm, vorzugsweise im Bereich von 30 µm bis 250 µm, wobei eine Wanddicke von 50 µm bis 160 µm, insbesondere etwa 70 µm besonders bevorzugt ist. Durch die Wahl der Wanddicke innerhalb des genannten Bereichs wird ein ausgewogenes Verhältnis von Energietransfer, von der Umgebung durch die Folienverpackung zum Phasenwechselmaterial und umgekehrt, zur mechanischen Stabilität der erfindungsgemäßen PCM-Kapsel erzielt.

Darüber hinaus kann es von Vorteil sein, wenn das Phasenwechselmaterial eines der oben genannten Hydrate eines anorganischen Salzes ist. Diese haben den Vorteil, dass sich bei der Verwendung einer Kombination derartiger Salzhydrate durch das Entstehen eutektischer oder peritektischer Mischungen leicht eine Phasenübergangstemperatur im gewünschten Bereich nahe einer Raumtemperatur von etwa 25 °C, also vorzugsweise ein Phasenübergang in einem Temperaturbereich von 20°C bis 30 °C einstellen lässt. Darüber hinaus zeigen derartige anorganische Salzhydrate eine hohe spezifische Schmezenthalpie im Bereich von 100 J/kg bis etwa 300 J/kg.

Bevorzugte PCMs auf Salzhydratbasis (SP 22 A4 und SP 25 A8 der Rubitherm Technologies GmbH, Berlin) zeigen einen Phasenübergang bei 22 °C bzw. 25 °C mit einer jeweiligen spezifischen Schmelzenthalpie von 165 J/kg bzw. 180 J/kg.

Darüber hinaus kann es sich als günstig erweisen, wenn die Folienverpackung einen mehrlagigen Aufbau aufweist. Auf diese Weise können durch Kombination von Folien mit verschiedenen spezifischen Eigenschaften die günstigen Eigenschaften der einzelnen Folien in der erfindungsgemäß verwendeten Folienverpackung vereint werden.

So kann beispielsweise bei einem mehrlagigen Aufbau einerseits Verschweissbarkeit und andererseits eine besonders hohe Stabilität gegenüber mechanischer Beanspruchung erzielt werden.

Es kann auch von Vorteil sein, wenn die Folienverpackung durch eine zusätzliche metallische Zwischenlage eine hohe Wasserdampfundurchlässigkeit aufweist.

Dadurch wird zum einen eine Wasserpermeation vom Inneren der erfindungsgemäßen kleinvolumigen PCM-Kapsel nach außen verhindert, so dass die wasserhaltigen Salzhydrate in der erfindungsgemäßen PCM-Kapsel gegen Austrocknen geschützt sind.

Darüber hinaus wird umgekehrt auch ein Eintritt von Wasser aus der Umgebung in das Innere der erfindungsgemäßen PCM-Kapsel verhindert. Dadurch werden die teilweise hygroskopischen anorganischen Salzhydrate vor einer Zersetzung oder einer Veränderung ihrer chemischen Zusammensetzung geschützt, wodurch eine Verschiebung ihrer Phasenübergangstemperatur sowie ein Verlust an Schmelzenthalpie des PCM verhindert werden kann.

Eine hohe Wasserdampfundurchlässigkeit kann auch dadurch erzielt werden, dass eine oder mehrere am Mehrschichtenverbund beteiligte Einzelschichten der Folienverpackung eine Barriereschicht aufweisen. Dabei kann es beispielsweise um eine im Vakuum erzeugte Metallisierungsschicht (beispielsweise durch CVD oder PVD), einen Lack oder eine Polymerbeschichtung handeln.

In diesem Zusammenhang kann es von Nutzen sein, wenn die Folienverpackung eine innere Lage, die beispielsweise Polyethylen (z.B. LLDPE), Polypropylen (z.B. BOPP), ethylenbasierte Copolymere (z.B. Ethylen / Methacrylsäure) oder Ethylen- Tetraflourethylen Copolymer (ETFE) und/oder Blends der genannten Polymere und Copolymere umfasst, eine äußere Lage, die Polyethylenterephthalat, Polypropylen, Copolymere und/oder Blends dieser Polymere umfasst, sowie mindestens eine dazwischen liegenden, wasserdampfsperrenden Zwischenlage.

Dabei ist die Zwischenlage aus Metall (beispielsweise Aluminium oder Silber), einer durch Vakuummetallbedampfung erzeugten Zwischenschicht, umfassend Metall (z.B. Aluminium) und/oder eine Oxidschicht (z.B. Siliziumoxid SiO₂, Aluminiumoxid Al₂O₃, SiOₓ, AlOₓ), oder einem wasserdampfsperrenden Polymer (wie Polyvinylidenchlorid (PVdC) oder Poly-βhydroxybutyrat (PHB) und/oder einer Lackschicht ( z. B. bestehend aus einem organischen Hybrid polymer (wie z. B. Ormocer).

In besonders bevorzugten Ausführungsformen hat die Folienverpackung mindestens eine weitere Lage aus Polyethylenterephthalat, die eine Dicke im Bereich von 20 µm bis 200 µm, vorzugsweise 40 µm bis 120 µm, insbesondere etwa 50 µm besitzt.

Eine Lage aus Polyethylenterephthalat mit einer Dicke im angegebenen Bereich verleiht der erfindungsgemäßen PCM-Kapsel eine ausreichende mechanische Stabilität, ohne die Energietransferrate durch die Folienverpackung übermäßig zu beeinträchtigen.

Hinsichtlich der zwischen der inneren und der äußeren Lage liegenden, wasserdampfsperrenden Lage kann es von besonderem Vorteil sein, wenn es sich dabei um eine Aluminiumfolie mit einer Dicke von 2 µm bis 15 µm, vorzugsweise 4 µm bis 10 µm und insbesondere mit einer Dicke von etwa 8 µm handelt. Dadurch wird eine ausreichende Wasserdampfundurchlässigkeit der Folienverpackung gewährleistet.

Es kann sich weiterhin als vorteilhaft herausstellen, wenn das in die Folienverpackung eingeschlossene PCM mindestens einen wärmeabsorbierenden Zuschlagstoff enthält. Dieser kann dazu beitragen, dass ein Energieeintrag durch Wärmestrahlung in das PCM ermöglicht bzw. begünstigt wird. In diesem Zusammenhang kann es besonders günstig sein, wenn die Folienverpackung aus transparentem bzw. transluzenten Materialien hergestellt ist oder die Oberfläche der Folienverpackung durch dunkle Einfärbung besonders absorptionsfähig für Wärmestrahlung ist.

Des Weiteren kann es sich als günstig erweisen, wenn die erfindungsgemäße PCM-Kapsel eine geschlossene Beutelform oder eine trigonal- pyramidale Form besitzt. In diesem Zusammenhang bedeutet eine "geschlossene Beutelform" eine Form, in der die beiden offenen Enden eines Folienschlauches in derselben Orientierung verschlossen wurde.

Im Gegensatz dazu wurden bei einer trigonal- pyramidalen Form der erfindungsgemäßen kleinvolumigen PCM-Kapsel die beiden offenen Enden des Folienschlauches mit einer zueinander um etwa 90° versetzten Orientierung verschlossen. Dabei können mehrere der erfindungsgemäßen PCM-Kapseln in einer Bandform miteinander verbunden sein, wobei in derartigen Bändern aus erfindungsgemäßen PCM-Kapseln sowohl solche mit geschlossener Beutelform als auch solche mit trigonal- pyramidaler Form und Kombinationen dieser beiden Formen in beliebiger Anordnung auftreten können. Die geschlossene Beutelform und die trigonal- pyramidalen Form besitzen wirtschaftliche Vorzüge, weil sie in einem kostengünstigen Verfahren hergestellt werden können. Darüber hinaus lassen sich mit dieser Form hohe Schüttdichten der erfindungsgemäßen PCM-Kapseln erzielen.

Weiterhin kann es von Nutzen sein, wenn die erfindungsgemäße PCM-Kapsel eine geschlossene Beutelform aufweist und zu wenigstens einer weiteren kleinvolumigen PCM-Kapsel mit geschlossener Beutelform in Längsrichtung des Folienschlauches parallel angeordnet ist, wobei die kleinvolumigen PCM-Kapseln durch dieselben, gemeinsamen Schweißnähte verschlossen sind. Im Hinblick auf das erfindungsgemäße Herstellungsverfahren kann dies beispielsweise erreicht werden, indem beim Einformprozess des Folienschlauches durch Rollschweißen eine zusätzliche Längsnaht erzeugt wird, die den Folienschlauch in Längsrichtung bspw. in wenigstens ein doppellumiges System unterteilt.

Darüber hinaus können die PCM-Kapseln übereinander oder nebeneinander angeordnet sein. Diese Ausführungsform der vorliegenden Erfindung ermöglicht es, verschiedene PCM mit verschiedenen Temperaturbereichen für den jeweiligen Phasenübergang getrennt voneinander einzuschließen. Damit ist es beispielsweise möglich, das Temperaturprofil der erfindungsgemäßen PCM-Kapsel derart einzustellen, dass sie in der Lage ist, Wärmeenergie in zwei getrennten Temperaturbereichen, beispielsweise im, Bereich von 23°C bis 30°C und im Bereich von 40°C bis 50°C zu absorbieren.

Des Weiteren kann es sich als günstig erweisen, wenn Ecken und Schweißnähte der Folienverpackung der erfindungsgemäßen kleinvolumigen PCM-Kapsel an der Innenseite und/oder an der Außenseite abgerundet ausgebildet sind. Eine derartige Abrundung der Ecken und Schweißnähte der Folienverpackung kann erzielt werden, indem das Verschließen des Folienschlauches durch Pressschweißen erfolgt, wobei abgerundete Pressbacken eingesetzt werden und/oder das Pressschweißen durch Abrollen der Pressbacken an der zu verschließenden Stelle des Folienschlauches erfolgt. Ein Abrunden der Ecken und/oder der Schweißnähte der Folienverpackung an der Innenseite hat den Effekt, dass die Gefahr eines Aufbrechens der Folienverpackung an den Ecken und/oder den Schweißnähten bei einem Druck des PCMs gegen diese Ecken und/oder gegen diese Schweißnähte verringert ist. Die Abrundung der Ecken und/oder Schweißnähte an der Außenseite der Folienverpackung hingegen hat den Effekt, dass die Gefahr des Aufschlitzens einer Folienverpackung einer anderen erfindungsgemäßen PCM-Kapsel aufgrund spitzer Ecken und/oder scharfer Schweißnähte reduziert werden kann.

Ein Schutz gegen Aufbrechen der Folienpackung kann auch durch Einbau einer besonders reißzähen Zwischenschicht erfolgen (z.B. durch Einsatz eines Ethylen/Methacrylsäure-Copolymers, Handelsname Surlyn).

Ebenso kann es von Nutzen sein, wenn jede Schweißnaht der Folienverpackung eine Breite von 5 % bis 40 %, vorzugsweise von 5 % bis 25 % und insbesondere von etwa 10 % der Länge der Schweißnaht aufweist. Durch eine Breite der Schweißnaht im genannten Bereich werden an jeder erfindungsgemäßen PCM-Kapsel Schweißnahtfahnen mit definierten Abmessungen erhalten, die als Abstandshalter zwischen den einzelnen erfindungsgemäßen PCM-Kapseln fungieren können. Dies gewährleistet einen verbesserten Kontakt zwischen den erfindungsgemäßen PCM-Kapseln und dem Wärmeträgermedium (z.B. Luft, Wasser, Wasser-Glykol-Gemisch). Auf diese Weise kann der Energieaustausch zwischen der Umgebung und dem Phasenwechselmaterial weiter erhöht werden.

Hinsichtlich des erfindungsgemäßen Herstellungsverfahrens kann es sich als günstig erweisen, wenn in der Stufe des Abtrennens der verschlossenen Abfülleinheit unter Erhalt einer erfindungsgemäßen kleinvolumigen PCM-Kapsel ein an einem Ende verschlossener Folienschlauch erhalten wird. Dies führt zu einer besonders hohen Wirtschaflichkeit des erfindungsgemäßen Herstellungsverfahrens, weil der dadurch erhaltene an einem Ende verschlossene Folienschlauch dem erfindungsgemäßen Verfahren erneut zugeführt werden kann, sodass das Verfahren in einer Vielzahl von Zyklen unter Bildung einer Vielzahl von erfindungsgemäßen PCM-Kapseln durchlaufen werden kann.

Auf ein Abtrennen der einzelnen Abfülleinheiten kann ggfs auch verzichtet werden, so dass ein kettenartig zusammenhängendes Cluster von PCM-Kapseln entsteht, das entweder ungeordnet oder auch geometrisch geordnet in ein Volumen eingebracht werden kann. Auf diese Weise kann beispielsweise eine Ordnungsstruktur mit günstigen Strömungseigenschaften aufgebaut werden. Diese Ausführungsform der erfindungsgemäßen PCM-Kapseln hat weiterhin den Vorteil, dass die hohen Ansprüche an die Dichtheit der PCM-Kapsel gegenüber Wasserpermeation in diesem Fall bezogen auf den Bereich der Schweißzonen in geringerem Maße erforderlich sind.

Darüber hinaus wird das Einfüllen des mindestens einen Phasenwechselmaterials in den an einem Ende verschlossenen Folienschlauch vorzugsweise durch Injizieren unter Verwendung einer Dosierpumpe durchgeführt. Zur Durchführung des erfindungsgemäßen Verfahrens und damit zur Herstellung der erfindungsgemäßen PCM-Kapseln haben sich vertikale Schlauchbeutelmaschinen der Firma Schwarze Automation, Stuttgart, als besonders günstig erwiesen.

Soll die Befüllung voneinander getrennter Volumeneinheiten des Folienschlauches ohne Beteiligung von Gaspolstern erfolgen, kann es sich als vorteilhaft erweisen, eine Überschussmenge des PCMs in die Folienverpackung einzufüllen. Dies hat zur Folge, dass eine Kontamination der Folienoberfläche mit Befüllungsgut in jenem Bereich erfolgt, an dem anschließend das Zusammenpressen und Verschweißen des Folienschlauches erfolgt. Die Druck- und Hitzeeinwirkung einfacher, elektrisch beheizter Schweißzangen reicht in solchen Fällen nicht aus, eine Verbindung innerhalb eines verschmelzungsfähigen Folieschlauches herbeizuführen. Diese Situation erfordert den Einsatz von Ulraschallschweißen (US-Schweißen), da hierbei eine weitgehende Verdrängung von Befüllungsgut aus dem Schweißspalt und eine intensive Interaktion der Schweißoberflächen erfolgen.

Durch geeignete Festlegung der Schweißparameter (wie beispielsweise Dicke der verschweißungsfähigen Folienlagen, Pressdruck, US-Schweißleistung und dgl.) können hierbei Schweißverbindungen erzeugt werden, die zwar nicht vollständig frei von Einschlüssen des befüllungsgutes sind, die aber die Entstehung von Migrationskanälen nicht zulassen, durch die PCM aus der erfindungsgemäßen PCM-Kapsel austreten könnte.

Ein weiterer Effekt bei einem derartigen Abfüllvorgang besteht darin, dass es zu einer fortschreitenden Kumulierung von Überschußmengen in der sich anschließenden Verkapselungseinheit kommen kann. Dies kann verhindert werden, indem optisch gesteuerte Pressbacken zum Einsatz kommen, die durch Verpressen der aktuell im Befüllungsprozess befindlichen Kapsel ein Verdrängen des Mediums in die nächste Kapsel bewirken, bis eine definierte Befüllung in der nächsten Kapsel erreicht ist.

Die erfindungsgemäßen PCM-Kapseln können in Latentwärmespeichern eingesetzt werden, die insbesondere in der Klimatisierungstechnik, als Baumaterialen, in der Automobilund Gerätetechnik sowie in Transporttechnologie Anwendung finden.

Nachstehend wird die vorliegende Erfindung unter Bezugnahme auf bevorzugte Ausführungsformen im Detail erläutert.

### Detaillierte Beschreibung bevorzugter Ausführungsformen

In einer bevorzugten Ausführungsform der vorliegenden Erfindung weist die erfindungsgemäße kleinvolumige PCM-Kapsel eine geschlossene Beutelform der Folienverpackung auf. Dabei zeigt die erfindungsgemäße PCM-Kapsel vorzugsweise eine Länge von 3 cm bis

6 cm, besonders bevorzugt von 4 cm bis 5 cm und insbesondere von etwa 4,5 cm.

Die Breite der Folienverpackung beträgt vorzugsweise 1 cm bis 2,5 cm, besonders bevorzugt 1,4 cm bis 1,8 cm und insbesondere etwa 1,6 cm. An beiden schmaleren Enden weist die Folienverpackung vorzugsweise Schweißnahtfähnchen auf, die sich über die gesamte Breite der Folienverpackung erstrecken und eine Breite von 5 % bis 40 %, vorzugsweise 5 % bis 25 % und besonders bevorzugt etwa 10 % der Länge der Schweißnaht aufweisen. Die tatsächlich erforderliche Breite der Schweißnahtfähnchen kann vom Fachmann anhand der einzustellenden Schüttdichte der erfindungsgemäßen PCM-Kapseln bestimmt werden. An ihrer dicksten Stelle weist die erfindungsgemäße kleinvolumige PCM-Kapsel bevorzugt eine Dicke von 0,2 cm bis 0,6 cm, insbesondere von etwa 0,4 cm auf.

An den Schweißnahtfähnchen der Folienverpackung sind die Schweißnähte und/oder die Ecken vorzugsweise abgerundet. Ebenso sind die Schweißnähte und/oder die Ecken an der Innenseite der Folienverpackung vorzugsweise abgerundet.

Die Folienverpackung dieser Ausführungsform der erfindungsgemäßen kleinvolumigen PCM-Kapsel ist aus einer vorzugsweise dreilagigen Folie mit einer Gesamtdicke von 20 µm bis 400 µm, bevorzugt 50 µm bis 160 µm und besonders bevorzugt etwa 70 µm aufgebaut. Die innere, dem PCM zugewandte Lage der Folienverpackung der erfindungsgemäßen PCM-Kapsel ist eine Polymerlage, die Polyethylen (z.B. LLDPE), Polypropylen (z.B. BOPP), ethylenbasierte Copolymere (z.B. Ethylen / Methacrylsäure), Ethylen- Tetraflourethylen Copolymer (ETFE), Polyethylenterephthalat oder Blends dieser Polymere und/oder Copolymere umfasst. Daran schließt sich eine mittlere Folienlage aus Metall oder einem wasserdampfsperrenden Polymer, vorzugsweise aus Aluminium, mit einer Dicke von 2 µm bis 15 µm, bevorzugt 4 µm bis 10 µm und besonders bevorzugt etwa 8 µm an.

Die äußere Lage der Folienverpackung der erfindungsgemäßen PCM-Kapsel ist eine Polymerlage, die Polyethylenterephthalat, Polyethylen, Polypropylen, Copolymere und/oder Blends dieser Polymere umfasst.

Als Phasenwechselmaterial wird beispielsweise ein PCM auf Salzhydratbasis, vorzugsweise auf Basis von Calciumchlorid-Tetrahydrat, Calciumchlorid- Hexahydrat, Kaliumfluorid-Dihydrat, Kaliumfluorid-Tetrahydrat, Lithiumchlorat- Trihydrat, Magnesiumsulfat- Heptahydrat, Magnesiumchlorid- Dihydrat, Magnesiumchlorid- Hexahydrat, Bariumhydroxid- Octahydrat, Natriumsulfat- Decahydrat oder Lithiumnitrat- Trihydrat verwendet, wobei Calciumchlorid- Hexahydrat, eine Mischung aus Calciumchlorid- Hexahydrat und Magnesiumchlorid- Hexahydrat sowie ggf. einem Bindemittel, eine Mischung aus Calciumchlorid-Tetrahydrat, Calciumchlorid- Hexahydrat, einem Paraffin sowie Ethandiol als Bindemittel bevorzugt sind.

Als besonders bevorzugtes PCM wird gemäß dieser Ausführungsform der vorliegenden Erfindung Calciumchlorid- Hexahydrat verwendet, dem als weiteres PCM ein Paraffin sowie Emulgatoren, Lösungsmittel, Bindemittel und/oder ähnliche als Additive zugesetzt sind. Das Volumen des eingefüllten PCM- Materials pro PCM-Kapsel beträgt 0,2 ml bis 50 ml, vorzugsweise 0,3 ml bis 5 ml, stärker bevorzugt 0,5 ml bis 2 ml und besonders bevorzugt etwa 1 ml.

Neben dem Phasenwechselmaterial kann die Folienverpackung der erfindungsgemäßen kleinvolumigen PCM-Kapsel auch ein Gaspolster beinhalten. Ein Volumenanteil des Gaspolsters in der Folienverpackung beträgt dabei, jeweils bezogen auf das Volumen des PCM in der Folienverpackung, vorzugsweise 5 Vol.-% bis 30 Vol.-%, vorzugsweise 5 Vol.-% bis 20 Vol.% und besonders bevorzugt 10 Vol.-% bis 15 Vol.-%.

Das Gaspolster ist bevorzugt aus einem Gas oder Gasgemisch gebildet, dass das in der erfindungsgemäßen PCM-Kapsel enthaltene PCM und die Folienverpackung nicht beeinträchtigt, wobei Luft, Stickstoff, Kohlendioxid, ein Edelgas (Helium, Neon, Argon, Xenon, Krypton, Radon) oder ein Gemisch aus zwei oder mehr der vorgenannten gebildet, besonders bevorzugt sind. Ganz besonders bevorzugt ist es, wenn die Folienverpackung vollständig mit PCM gefüllt ist, d.h., in der Folienverpackung annähernd kein Gaspolster eingeschlossen ist.

Die geschlossene Beutelform der Folienverpackung kann erhalten werden, indem eine der Folienverpackung entsprechende Endlosfolie der Schlauchbeutelmaschine zugeführt, diese maschinell in Streifen geschnitten und die resultierenden Streifen zu einem Folienschlauch verschweißt werden.

Daraufhin wird der Folienschlauch mittels beheizter Pressbacken oder US- Schweisstechnik an einem Ende abgepresst. Unter Verwendung von Injizierpumpen wird das jeweilige Volumen an PCM in den an einem Ende geschlossenen Folienschlauch eingefüllt und das noch offene Ende des Folienschlauchs wird wiederum durch beheizte Pressbacken oder US-Schweißtechnik verschlossen und verschweißt.

Beim Pressvorgang können Form und Bewegung der Pressbacken derart gewählt werden, dass Ecken und Schweißnähte der Folienverpackung an der Innenseite und/oder an der Außenseite abgerundet sind. Die resultierende kleinvolumige PCM-Kapsel wird abgetrennt, wodurch wiederum ein an einem Ende verschlossener Folienschlauch entsteht, in dem wiederum PCM-Material eingefüllt werden kann, was zu einem periodischen Verfahren führt.

Gemäß einer besonders bevorzugten Ausführungsform sind zwei derartige erfindungsgemäße PCM-Kapseln mit geschlossener Beutelform derart miteinander verbunden, dass beide kleinvolumige PCM-Kapseln in Längsrichtung parallel zueinander angeordnet sind, wobei die beiden kleinvolumigen PCM-Kapseln durch gemeinsame Schweißnähte verschlossen sind. Dabei ist es weiter bevorzugt, dass in den beiden verbundenen PCM-Kapseln jeweils ein anderes PCM enthalten ist, so dass in zwei verschiedenen Temperaturbereichen (z.B. von 21 °C bis 26 °C und von 40 °C bis 50 °C) Energie absorbiert werden kann.

In einer weiteren bevorzugten Ausführungsform der vorliegenden Erfindung weist die erfindungsgemäße PCM-Kapsel eine trigonal- pyramidale Form der Folienverpackung auf. Dabei besitzt die trigonale Pyramide der erfindungsgemäßen kleinvolumigen PCM-Kapsel vorzugsweise eine Kantenlänge von 1 cm bis 4 cm, besonders bevorzugt von 2 cm bis 3 cm und insbesondere von etwa 2,5 cm.

Dabei können alle Kanten der trigonalen Pyramide der erfindungsgemäßen kleinvolumigen PCM-Kapsel verschieden lang sein. Es ist jedoch bevorzugt, dass die erfindungsgemäße kleinvolumige PCM-Kapsel annähernd Tetraederform aufweist, d.h. alle Kanten der trigonalen Pyramide sind vorzugsweise annähernd gleich lang.

Hinsichtlich des Materials der Folienverpackung, des PCMs, des Volumens des PCMs sowie der Art und des Volumenanteils des Gaspolsters werden für die erfindungsgemäße kleinvolumige PCM-Kapsel mit trigonal- pyramidaler Form der Folienverpackung vorzugsweise diejenigen verwendet, die in Bezug auf die Ausführungsform der erfindungsgemäßen kleinvolumigen PCM-Kapsel mit geschlossener Beutelform der Folienverpackung erläutert worden sind.

Die trigonal- pyramidale Form der Folienverpackung kann erhalten werden, indem eine der Folienverpackung entsprechende Endlosfolie einer Schlauchbeutelmaschine zugeführt wird, diese maschinell in Streifen geschnitten wird und die resultierenden Streifen zu einem Folienschlauch verschweißt werden.

Daraufhin wird der Folienschlauch mittels beheizter Pressbacken oder US-Schweißtechnik an einem Ende abgepresst. Unter Verwendung von Injizierpumpen wird das jeweilige Volumen an Phasenwechselmaterial in den an einem Ende geschlossenen Folienschlauch eingefüllt und das offene Ende des Folienschlauchs wird wiederum durch beheizte Pressbacken oder US-Schweißtechnik verschlossen und verschweißt, nachdem der Folienschlauch entlang seiner Längsachse um etwa 90° gedreht worden ist.

Beim Pressvorgang können Form und Bewegung der Pressbacken derart gewählt werden, dass Ecken und Schweißnähte der Folienverpackung an der Innenseite und/oder an der

Außenseite abgerundet sind. Die resultierende kleinvolumige PCM-Kapsel kann abgetrennt werden, wodurch wiederum ein an einem Ende verschlossener Folienschlauch entsteht, in dem wiederum PCM-Material eingefüllt werden kann, was zu einem periodischen Verfahren führt.

Das Abtrennen der erfindungsgemäßen PCM-Kapseln kann für beide Raumformen auch unterlassen werden, wodurch ein kettenartiges PCM-Cluster einer definierten Gesamtlänge erzeugt werden kann.

Nun soll die vorliegende Erfindung anhand der folgenden, nicht einschränkenden Beispiele detailliert erläutert werden.

### Beispiele

### Beispiel 1

In diesem Beispiel besitzt die kleinvolumige PCM-Kapsel eine geschlossene Beutelform. Das darin verwendete Phasenwechselmaterial ist ein PCM auf Salzhydratbasis (SP 22 A4 der Firma Rubitherm Technologies GmbH, Berlin; Phasenübergangstemperatur 22 °C; spezifische Schmelzenthalpie 165 J/g).

Die Folienverpackung der kleinvolumigen PCM-Kapsel ist eine dreilagige Folie mit einer inneren, dem PCM zugewandten Lage aus Polypropylen, einer mittleren Lage aus Aluminium mit einer Dicke von 7,5 µm und einer äußeren Lage aus Polyethylenterephthalat.

Die Gesamtdicke der Folie beträgt 70 µm. Die beutelförmige Folienverpackung hat eine Breite von 1,6 cm und eine Länge von 4,5 cm, wobei sich an beiden Enden der Länge Schweißfähnchen mit einer Breite von 0,4 cm befinden, die sich über die gesamte Breite der Folienverpackung erstrecken. An ihrer dicksten Stelle weist die erfindungsgemäße kleinvolumige PCM-Kapsel eine Dicke von 0,4 cm auf.

Das Volumen des eingefüllten PCM-Materials beträgt 3 cm³. In dieser Ausführungsform ist die Folienverpackung vollständig mit Phasenwechselmaterial gefüllt, d.h., in der Folienverpackung ist annähernd kein Gaspolster eingeschlossen.

An den Schweißfähnchen der Folienverpackung sind die Kanten und Ecken abgerundet. Ebenso sind die Ecken an der Innenseite der Folienverpackung abgerundet.

Die Herstellung der kleinvolumigen PCM-Kapseln erfolgt unter Verwendung einer Schlauchbeutelmaschine vom Typ ABM 10 BXPN (Firma Schwarze Automation, Stuttgart). Dazu wird eine der Folienverpackung entsprechende Endlosfolie der Schlauchbeutelmaschine zugeführt, diese wird maschinell in Streifen geschnitten und die resultierenden Streifen zu einem Folienschlauch verschweißt. Der Folienschlauch wird durch erhitzte Pressbacken oder US-Schweißtechnik an einem Ende abgepresst und verschlossen. Mittels Injizierpumpen wird die entsprechende Menge des PCMs in den nun an einem Ende geschlossenen Folienschlauch eingefüllt und das offene Ende des Folienschlauchs wird mittels beheizter Pressbacken oder US-Schweißtechnik derart verschweißt, dass das Phasenwechselmaterial ohne Lufteinschluss in der Folienverpackung eingeschlossen ist. Beim Pressvorgang wird durch Form und Bewegung der Abpressbacken gewährleistet, dass Ecken und Schweißnähte der Folienverpackung an der Innenseite und an der Außenseite abgerundet sind. Die resultierende kleinvolumige PCM-Kapsel wird abgetrennt, wodurch wiederum ein an einem Ende verschlossener Folienschlauch entsteht, in dem wiederum PCM eingefüllt werden kann, sodass ein zyklischer Prozess resultiert.

Die erhaltenen PCM-Kapseln wurden einer Beständigkeitsprüfung unterzogen, bei der durch zyklisches Abkühlen und Erwärmen eine Vielzahl von Phasenübergängen des PCMs durchlaufen wird. Nach 25.000 Zyklen zeigten die kleinvolumigen PCM-Kapseln keinerlei erkennbare Undichtigkeiten. Die Kapazität des PCM sowie seine Übergangstemperatur waren annähernd unverändert.

### Beispiel 2

In diesem Beispiel besitzt die Folienverpackung der kleinvolumigen PCM-Kapsel eine annähernd tetraedrische Form. Die Kantenlänge des Tetraeders beträgt dabei etwa 2,5 cm. Als Phasenwechselmaterial ist SP 25 A8 (Firma Rubitherm Technologies GmbH, Berlin; Übergangstemperatur 25 °C; spezifische Schmelzenthalpie 180 J/g) in einem Volumen von 2 cm³ in der Folienverpackung eingeschlossen. Als Gaspolster sind darüber hinaus 0,2 cm³ Luft mit in der Folienverpackung enthalten.

Die Folienverpackung besteht aus einer vierlagigen Folie mit einer Gesamtdicke von 80 µm, die aus seiner inneren Lage aus Polypropylen, einer sich anschließenden Lage aus Polyethylenterephthalat, einer sich wiederum daran anschließenden Aluminiumlage mit einer Dicke von 8 µm und einer äußeren Lage aus Polypropylen aufgebaut ist.

Die Schweißnähte der Folienverpackung weisen eine Bereite von 0,3 cm auf und erstrecken sich über die gesamte Länge von zwei nicht aneinander grenzenden Kanten des Tetraeders. Dabei sind wiederum die Ecken und Schweißnähte der Folienverpackung sowohl an der Innenseite als auch an der Außenseite abgerundet ausgebildet.

Die Herstellung der kleinvolumigen PCM-Kapsel dieser Ausführungsform erfolgt unter Verwendung einer Schlauchbeutelmaschine vom Typ AMT (Firma Schwarze Automation, Stuttgart) unter Verwendung des oben beschriebenen Verfahrens, wobei das Abpressen der einzelnen PCM-Kapseln derart erfolgt, dass der an einem Ende offene Folienschlauch nach seinem Befüllen mit PCM-Material mit einer um 90° versetzten Orientierung der Pressbacken gegenüber der Längsrichtung der ersten Schweißnaht des Folienschlauches erfolgt, sodass eine trigonal- pyramidale bzw. tetraedrische Form der Folienverpackung resultiert.

Die resultierenden PCM-Kaspeln dieser Ausführungsform wurden ebenfalls dem oben beschriebenen Langzeitstabilitätstest unterzogen. Nach Durchlauf von 25.000 Zyklen waren keine Undichtigkeiten der PCM-Kapseln erkennbar. Die Kapazität des PCM sowie seine Übergangstemperatur waren unverändert.

## Patentansprüche

1. Kleinvolumige PCM-Kapsel, umfassend mindestens ein Phasenwechselmaterial und eine das Phasenwechselmaterial einschließende Folienverpackung, wobei ein Volumen des mindestens einen Phasenwechselmaterials im Bereich von 0,2 ml bis 50 ml in der Folienverpackung eingeschlossen ist, wobei die Folienverpackung ein an den Enden verschlossener Folienschlauch bzw. Folienschlauchabschnitt ist und die Folie eine Wanddicke im Bereich von 20 µm bis 400 µm aufweist.

2. Kleinvolumige PCM-Kapsel gemäß Anspruch 1, **dadurch gekennzeichnet, dass** die Folienverpackung weiterhin ein Gaspolster umfasst, welches bezogen auf das Volumen des mindestens einen Phasenwechselmaterials in einem Volumenanteil von 5 Vol.-% bis 30 Vol.-% eingeschlossen ist.

3. Kleinvolumige PCM-Kapsel gemäß Anspruch 1 oder Anspruch 2, **dadurch gekennzeichnet, dass** das Phasenwechselmaterial wenigstens ein Hydrat eines anorganischen Salzes ist.

4. Kleinvolumige PCM-Kapsel gemäß einem der Ansprüche 1 bis 3, **dadurch gekennzeichnet, dass** die Folienverpackung einen mehrlagigen Aufbau besitzt und/oder wasserdampfsperrend ausgebildet ist.

5. Kleinvolumige PCM-Kapsel gemäß Anspruch 4, **dadurch gekennzeichnet, dass** die Folienverpackung
• eine innere Lage - die Polyethylen, Polypropylen, ethylenbasiertes Copolymer, Ethylen-Tetraflourethylen-Copolymer (ETFE) und/oder Blends der genannten Polymere und Copolymere umfasst;
• eine äußere Lage - die Polyethylenterephthalat, Polypropylen, Copolymere und/oder Blends dieser Polymere umfasst;
• sowie mindestens eine dazwischen liegenden, wasserdampfsperrenden Zwischenlage; umfasst.

6. Kleinvolumige PCM-Kapsel gemäß Anspruch 4 oder Anspruch 5, **dadurch gekennzeichnet, dass** die Zwischenlage umfasst
• wenigstens eine durch Vakuummetallbedampfung erzeugte Schicht, umfassend ein Metall und/oder ein Metalloxid
• oder wenigstens ein wasserdampfsperrendes Polymer
• oder wenigstens eine Lackschicht, bestehend aus einem organischen Hybridpolymer

7. Kleinvolumige PCM-Kapsel gemäß einem der vorangegangenen Ansprüche, **dadurch gekennzeichnet, dass** die Folienverpackung mindestens eine weitere Lage umfasst, die Polyethylenterephthalat umfasst und zwischen der inneren Lage und der Zwischenlage angeordnet ist.

8. Kleinvolumige PCM-Kapsel gemäß einem der vorangegangenen Ansprüche, **dadurch gekennzeichnet, dass** die Zwischenlage eine Aluminiumschicht mit einer Dicke von 2 µm bis 15 µm, vorzugsweise 4 µm bis 10 µm ist.

9. Kleinvolumige PCM-Kapsel gemäß einem der vorangegangenen Ansprüche, **dadurch gekennzeichnet, dass** sie eine geschlossene Beutelform oder eine trigonal- pyramidale Form besitzt.

10. Kleinvolumige PCM-Kapsel gemäß Anspruch 9, **dadurch gekennzeichnet, dass** sie eine geschlossene Beutelform aufweist und zu einer weiteren kleinvolumigen PCM-Kapsel in Längsrichtung des Folienschlauches parallel angeordnet ist, wobei die kleinvolumigen PCM-Kapseln durch dieselben, gemeinsamen Schweißnähte verschlossen sind.

11. Kleinvolumige PCM-Kapsel gemäß einem der vorangegangenen Ansprüche, **dadurch gekennzeichnet, dass** Ecken und Schweißnähte der Folienverpackung an der Innenseite und/oder an der Außenseite abgerundet ausgebildet sind.

12. Kleinvolumige PCM-Kapsel gemäß einem der vorangegangenen Ansprüche, **dadurch gekennzeichnet, dass** jede Schweißnaht der Folienverpackung eine Breite von 5 % bis 40 % der Länge der Schweißnaht aufweist.

13. Verfahren zur Herstellung kleinvolumiger PCM-Kapseln gemäß einem Ansprüche 1 bis 12, wobei das Verfahren die folgenden Stufen umfasst:
(i) Bereitstellen eines an einem Ende verschlossenen Folienschlauches,
(ii) Einfüllen von mindestens einem Phasenwechselmaterial in einem Volumen von 0,2 ml bis 50 ml in den in Stufe (i) bereitgestellten, an einem Ende verschlossenen Folienschlauch, wodurch eine Abfülleinheit erhalten wird,
(iii) Verschließen der in Stufe (ii) erhaltenden Abfülleinheit durch Pressschweißen und
(iv) Abtrennen der verschlossenen Abfülleinheit, wodurch eine kleinvolumige PCM-Kapsel erhalten wird.

14. Verfahren gemäß Anspruch 13, **dadurch gekennzeichnet, dass** das Einfüllen des mindestens einen Phasenwechselmaterials in Stufe (ii) durch Injizieren unter Verwendung einer Dosierpumpe erfolgt.

15. Latentwärmespeicher, umfassend eine Vielzahl kleinvolumiger PCM-Kapseln gemäß einem der Ansprüche 1 bis 12.
